Europäisches Patentamt

(19) European Patent Office

Office européen des brevets

(11) Publication number: **0 355 242 B1**

# EUROPEAN PATENT SPECIFICATION

(12)

(45) Date of publication of patent specification :
14.08.91 Bulletin 91/33

(51) Int. Cl.⁵ : **B01J 20/06, G01N 30/48**

(21) Application number : **88810578.0**

(22) Date of filing : 23.08.88

(54) **Method for making mineral filtration beads to be used in gel adsorption and permeation chromatography.**

(43) Date of publication of application :
28.02.90 Bulletin 90/09

(45) Publication of the grant of the patent :
14.08.91 Bulletin 91/33

(84) Designated Contracting States :
DE FR GB IT NL

(56) References cited :
EP-A- 0 216 730
FR-A- 1 473 240
FR-A- 2 105 908
US-A- 4 308 172

(73) Proprietor : **BATTELLE MEMORIAL INSTITUTE**
**7 route de Drize**
**CH-1227 Carouge/Genève (CH)**

(72) Inventor : **Gonzalez Oliver, Carlos**
**103, Bois dela Chapelle**
**CH-1213 Onex/Ge (CH)**

(74) Representative : **Dousse, Blasco et al**
**7, route de Drize**
**CH-1227 Carouge/Genève (CH)**

## Description

The present invention relates to porous mineral beads of substantially uniform spherical shape which can be used in chromatographic separation and related techniques such as gel adsorption and permeation chromatography. These beads have a homogeneous metaloxane structure involving the oxides of metals silicon, zirconium, titanium and aluminum.

It is well known that current organic porous filtrating materials usable in gel adsorption and permeation chromatography, for instance cross-linked dextrans (SEPHADEX), polyacrylamides, agarose, polyhydroxyacrylates, polystyrenes and others, cannot withstand relatively high filtration pressures because they tend to swell or shrink with consequent deterioration of the permeability parameters and loss of filtration efficiency (channelling).

Now, for efficient chromatography separation as well as for the selective adsorption of biochemicals (enzymes, cells, hormones, lectins and others) low deformation materials are needed, preferably of spherical shape, to ensure homogeneous distribution and advantageously regenerable by thermal treatments.

Consequently, mineral beads have been developed for this purpose, mainly silica beads with relatively well controlled size and porous structure. Such materials are, for instance, the filtering aids named in the trade as LICHROSORB (MERCK) ; TDK-Gel (TOYO SODA) ; SPHEROSIL (RHONE-POULENC) and Controlled Pore Glass (CPG by CORNING). These materials are generally manufactured by gelling-dispersive techniques starting from water-glass or colloïdal silica sols or by fusion of silicate batches. Methods also exist based on the prepolymerization of silicon alcoxides into liquid oligomers, pulverization or dispersion of said oligomers into droplets of controllable size and hardening of said droplets by hydrolytic gelation into porous $SiO_2$ beads. References on these methods are for instance : R. ENDELE et al., J of Chromatography $\underline{99}$ (1974), 377-393 ; USP 3,667.909 (THOMAS) ; KOHLSCHUTTER et al., Kolloid Zeitsch. & Zeitsch. für Polymere $\underline{243}$ (1971), 148-152; DE-A- 2 155 281 (MERCK).

Although beads of porous silica presently on the market have merits, they are costly, sometimes lack homogeneity in shape (spherical), size and porosity and they are not stable in alkali (pH > 10). Therefore attempts have been made to provide porous composite minerals having improved stability in basic media. For instance, DE-A-2.317.455 discloses powders for packing chromatography columns consisting of porous microspheres (1-10 μm) with a thermally stable metal oxide such as $Al_2O_3$, $ZrO_2$, $TiO_2$, $Fe_2O_3$ or $SnO_2$ on the surface. DE-A-2.411.846 discloses the existence of $Al_2O_3$ microspheres obtained by agglomeration and firing of alumina particles resulting from the spray-dehydration of acidified aluminate solutions.

On the other hand, porous $SiO_2$ or mixed metal oxides are well known which can be prepared, as already mentioned, by the technique called "sol-gel hydrolysis" which involves control-hydrolyzing metal alkoxides into corresponding hydroxylated compounds and subsequent self-condensation to metaloxane structures by dehydration and heat. For instance, JP-A-58-194.748 (SUWA SEIKOSHA) discloses the hydrolysis of metal alkoxy compounds by the sol-gel process and the conversion of the gelled products by heat into microporous structures, suitable for use as carrier for enzymes and others living materials. Other references in the field of porous glass for various purposes including filtration media and the manufacturing of optical glass are : JP-A-58-208.144 ; 58-213.655 ; 58-199.734 ; 58-199.733 ; 58-194.749 (all to SUWA SEIKOSHA) ; JP-A-56-169.121 (HITACHI) ; JP-A-57-190.645 (TOYOBO) ; JP-A-57-191.220 (HITACHI) ; H. MURAYAMA et al., Shikizai Kyokaishi $\underline{1973}$, 46 (7), 439-44 ; B.E. YOLDAS, J. Am Ceram. Soc $\underline{1982}$, 65 (8), 387-93 ; Ultrastruct. Process. Ceram., Glasses Compos. (Proc. Int. Conf.) $\underline{1983}$ 60-69. D.R. WILEY, New-york ; E. YASUDA et al., Sci. Sintering $\underline{1978}$, 10 (2), 97-102 ; M.A. VICARINI et al., Bull. Soc. Chem. Fr. $\underline{1970}$ (10), 3884-7. Further references on filtration beads are outlined below.

EP-A-65863 discloses a method of producing ceramic-forming metal hydroxide and oxide powders with variable and predeterminable sintering and densifying characteristics by hydrolyzing several samples of metal alkoxides using different amounts of water, calcining and sintering said hydrolyzed samples to produce samples of said metal oxide powder, and measuring the density of said samples of said metal oxide to obtain the relationship between said density and the water-alkoxide ratio. Then, after selecting the sintered density desired, hydrolyzing said alkoxide with the amount of water which corresponds to said desired sintered density to form said metal hydroxide, and drying said metal hydroxide it is possible to form said desired metal hydroxide powder ; if an oxide powder is desired, heating said metal hydroxide powder to form said metal oxide powder can then be performed.

WO-A-8303823 discloses a method for preparing a ceramic material comprising a metal oxide, said method including ball milling a metal oxide powder and sintering said metal oxide powder. The latter is obtained by hydrolyzing at least one alkoxide to form a slurry, drying the metal oxide powder in said slurry, granulating and calcining, and conducting said ball milling within a determined pH range that maximizes dispersion of metal oxide powder within the slurry.

Kolloid Zeitschrift & Zeitschrift für Polymere 243 (1971), 148-152 discloses a method for making porous beads from silica. According to this method, a mother solution is prepared from silica ethoxide, diluted with N/100 hydrochloric acid and alcohol ; then after a preliminary hydrolysis has taken place, the solution is heated to 120° to drive off volatiles and there is obtained a solution (of oligomers) in which 1 to 4 ethoxy groups per Si atom have been split. This solution is stable and reproducible. It was converted, immediately afterwards, into beads by adding it under violent stirring to an ethanol-water solution activated with N/10 HCl. After agitating several hours at 70°C, the beads were boiled with diluted HCl, thoroughly washed with water, predried in air and finally dried at 120°C. Depending on preparation parameters, a full range of beads of size from 10 μm to 1 mm were obtained. Typical bead properties (very briefly summarized) were : distribution of preferred size in classified fraction : 90% ; structure density : 2.04 g/ml ; porosity 0.373 ; specific area 682 m²/g (BET) ; volume of pores : 0.29 ml/g ; average pore diameter 20 × 10⁻¹⁰m (Å) ; etc....

US-A-3922333 discloses the preparation of mullite powder by boiling a mixture of aluminum and silicon isopropoxides in isopropanol in the presence of ammonium hydroxide. The powder can be thereafter sintered by hot pressing into objects of near theoretical density usable as catalyst bases.

US-A-3887692 discloses the preparation of spheroids of aluminum halo-hydroxides as an antiperspirant component. One useful dispersion technique, i.e. the discharging of very fine droplets of a basic aluminum halide solution into the vortex of an insolubilisation dispersant medium is detailed in this reference.

EP-A-216730 (BATTELLE) discloses the preparation of porous mineral beads containing at least the oxides of Si and Zr and, optionally, oxides of other metals including aluminum and titanium. One technique of manufacturing these beads involves the initial preparation of metaloxane oligomer precursor solutions by the controlled prehydrolysis of metal alkoxides in acidified moistened alkanol solutions and elimination of volatiles by boiling under reduced pressure. Then the precursors (which are actually storage stable) are formed into droplets, for instance by dispersion into an aqueous non-compatible medium, or by air atomization, and the droplets are gelled into beads which are further hardened by pursuing hydrolysis and self-condensation under the influence of catalysts such as aqueous ammonia.

Beads in the 5-500 μm range with a porosity of 100-600 m²/g (pores volumes 0.2 to 4 cm³/g) and pore cross-sectional sizes of about 2-500 nm were achievable by this technique. Document EP-A-216730 also discloses that the porosity of the filtration beads can be amplified by refluxing the beads with aqueous-alcoholic alkali.

Although the porous mineral beads disclosed in EP-A216730 have a lot of merit, it was felt that further improvements could be brought thereto namely regarding pore cross-sectional radius distribution. Indeed, for most fine and sensitive affinity chromatography applications, using beads with a narrow pore cross-sectional size distribution is an important asset. After painstaking efforts, the present inventor uncovered a method capable of providing porous beads with much improved control of pore size distribution. This method is summarized in annexed claim 1.

The proportion of Zr, Ti and Al compounds added to the silicon alkoxide are variable within wide limits, usually from 0.03 to 1.5 moles of the three Zr, Ti and Al together for 1 mole of Si. In this range, the proportion of one of the Zr, Ti or Al relative to the others can be the same or different. One preferred composition comprises (expressed in weight % of the oxides) : $SiO_2$ 85 ; $ZrO_2$ 5 ; $TiO_2$ 5 ; $Al_2O_3$ 5.

The alkoxides of silicon, zirconium, titanium and aluminum used in this method are generally the lower alkoxides and complex chelates used commonly in sol-gel technology. Among such compounds, the methoxides, ethoxides, propoxides, isopropoxides, butoxides (n, iso and tert) and other alkoxides ($C_1$ to $C_8$) can be recited, not excluding other higher alkoxides. The aluminum compounds are advantageously the bi-dentate chelate of Al-alkoxides, e.g. acetyl-acetonate or aceto-acetate of Al-dialkoxides, e.g. the di-sec.butoxide.

Steps (a) and (b) of claim 1 are preferably carried out in a water-alkanol solution, i.e. a solution of water in one or more lower alcohols such as methanol, ethanol, propanol, isopropanol, butanol (n, iso, tert), and the like. The proportion of the water and the organic component in this medium is essentially variable and not critical since other parameters like acid concentration, temperature and time can be adjusted separately to provide a desired degree of prehydrolysis and self-condensation. In general, the prehydrolysis solution contains from about 0.05 to 1.5 moles of water per mole of silicon alkoxide. The acid used to acidify the solution is a mineral acid, preferably hydrochloric acid.

As said before, depending upon the prehydrolysis conditions, i.e. time, temperature, concentration of water, amount of acid catalyst, the degree of prehydrolysis can be varied at will. The viscosity of the precursor solution (i.e. the solution of prehydrolysed oligomeric metaloxane) increases with increased extent of hydrolysis, for instance by increasing the water concentration, the heating temperature and the reaction time. It is generally assumed that the degree of prehydrolysis involved in precursor formation affects about 2 to 50 moles % of the originally mixed metal alkoxides. On the higher end of this range, the precursor may become very viscous or even solidify after substantially all volatile components (alcohol, water) have been removed by distillation. An inverse relation seems to exist between the amount of water used in the prehydrolysis step and the porosity of the beads manufactured from the prehydrolyzed material : the smaller the quantity of water used, (and the degree of prehydrolysis) the larger the volume of the pores.

The precursors are stable and can be stored without gelling for an extended period. To be used in step (c) the precursor solution is diluted in a water-compatible solvent, e.g. one or more lower alcohols such as methanol, ethanol, propanol, butanol, amyl alcohol (and isomers thereof), and the like, and water soluble solvents like acetone, THF, dioxane, diols, glymes, etc... ; this dilution also contains a non-water compatible solvent such as hydrophobic hydrocarbons like hexane, heptane, octane, benzene, toluene, xylene, etc... Cyclohexane is preferred. The proportions of precursor, water-compatible and hydrophobic solvents are chosen to achieve free flowability of the solution and favorable dispersability into droplets when added to a large volume of water in agitation. Preferably the dilution will contain about 1-2 parts (v/v) of diluting mixture for about 0.1 to 10 parts of the oligomeric precursor. However these limits are not critical and can be outstretched on both ends of the range.

In step (c), the dilution of the precursor is dispersed in a large volume of water-ethanol mixture which can also contain additives which help controlling the conversion of the oligomers into small spherical droplets upon dispersion into water. These additives include ionic and non-ionic surfactants like polyoxyethylene glycol sorbitan-monolaurate, sodium-lauryl sulfate and the like. Preferred surfactants are the Tween® -like surfactants added to the water-alcohol dispersive mixture in about 0.1-1% by weight.

The amount of alcohol (methanol, ethanol or isopropanol) in the alcohol-water dispersive mixture is from about 0.1 parts to 2 parts (v/v) of alcohol for 10 parts of water. The proportion (v/v) of the dilution of oligomeric precursor to the alkanol-water dispersive mixture into which it is added is in the range of 1 : 100 to 1 : 2, preferably 1 : 5 to 1 : 20. This addition is preferably performed dropwise at room temperature, the dispersive aqueous solution being stirred at from about 300 to 1000 rpm with non-turbulent agitation. When the oligomer dilution is added slowly this way, microdroplets of uniform size, 1-200 µm, preferably 10-100 µm diameter, will form and become gelled and hardened to corresponding porous glassy microsphere, either by raising the temperature of the dispersing medium to about 60-65° or by the addition of gelling catalysts. The preferred catalyst is diluted ammonia, i.e. (considering that ordinary commercial concentrated ammonia is 25%) ammonia solutions ranging from about 5 to 25% added in amounts, relative to the dispersion, of 1 part to 10 parts of ammonia solution for 20 parts of the dispersion.

Generally the catalyst solution is added dropwise under agitation and after the addition is complete, agitation is pursued for one to several hours, after which the dispersion is allowed to stand and the porous glass spherical beads accumulate to the bottom of the dispersion container.

For separating the beads from the dispersing phase and obtaining them in dry form, the first operation is decanting and washing, i.e. syphoning off the supernatant liquid which is normally cloudy because of the presence of unsettled sub-micronic particles, then adding a washing or rinsing liquid (usually an alcohol), allowing to decant again, and repeating once or more this purification stage. Then several drying routes are available : for instance the beads can be simply filtered and drained under suction ; or the slurry of beads and washing liquid can be roto-evaporated (under reduced pressure and progressive heating) or the technique of hypercritical drying can be used.

Hypercritical drying consists in effecting the drying under high pressure and temperature in an atmosphere of alcohol or $CO_2$ vapor. This is disclosed in detail in US-A-4,667,417. In the corresponding embodiment of the instant method, the liquid forming the slurry of beads before drying is progressively replaced by ethanol in a pressure vessel. Then the vessel is filled with an inert gas, e.g. $N_2$ or Ar, and the gas pressure is raised to a pressure of 50-100 bar at room temperature ; subsequently, the temperature is raised to 200-350°C until the pressure exceeds the critical point, which means that the liquid in the bead pores is converted to the critical state (this occurs within the pores themselves with no pressure difference between the outside and the inside of the pores which strongly reduces the risks of bead fracture). This pressure may range for alcohol from about 180-250 bar. After standing a while under these conditions, the autoclave is depressurized slowly, i.e. at a rate of 1-50 bar/hr until it is 5 bar. Then the temperature is lowered to normal and the dry beads can be removed from the vessel. In a variant, $CO_2$ can be used in place of alcohol for hypercritical drying, in conformity with US-A-4,667,417.

The volume of the pores of the beads dried according to the foregoing routes is generally above 1 cm³/g of material ; in some cases, it may be as high as 4 cm³/g, this being particularly so for the beads that result from the processing of precursors which were prehydrolyzed with relatively little water (0.1 to 0.3 moles of $H_2O$ per mole of $Si(OET)_4$ ; see Tables II and III in the Experimental section hereafter).

However, the cross-sectional size of the pores is rather widely distributed. This may be appreciated from the annexed drawings in which :

Fig 1 is a graph in which the cross-dimensional size of the pores (radii) expressed in angströms (X axis) is plotted against their relative occurrence given by the statistical pore distribution expressed in % (Y axis).

Fig 2 is a graph similar to that of fig 1 but pertaining to the bead having been subjected to step (f), i.e. salt impregnation of the instant invention.

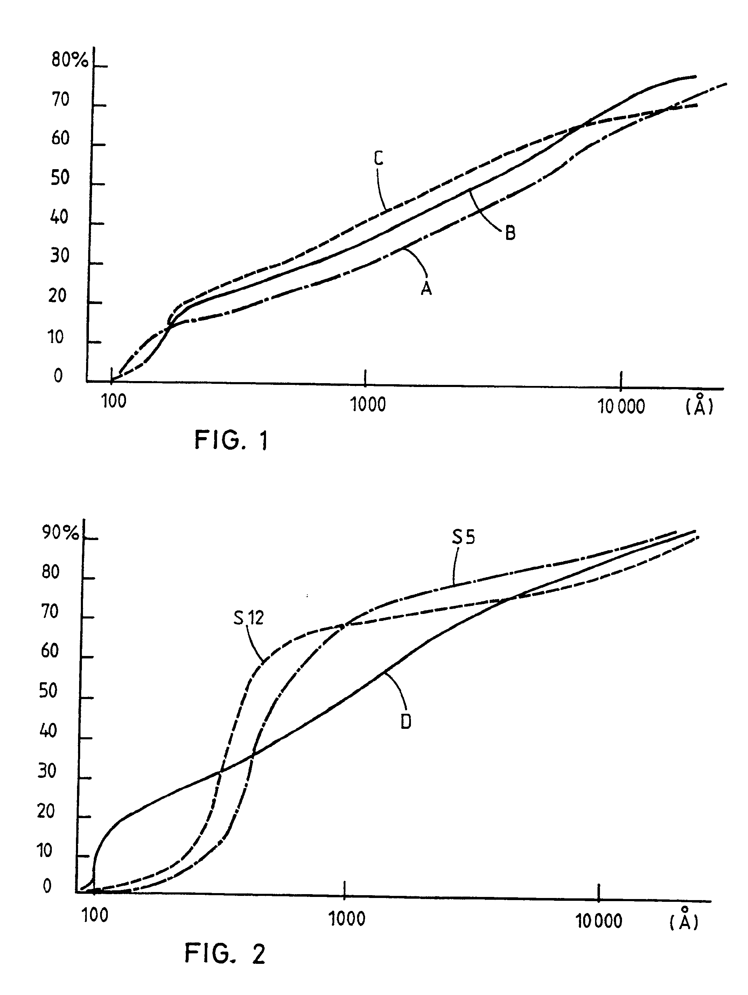

It can be seen that the curves A, B, and C fig 1 (for details, see the Experimental part) which refer to three different kind of beads obtained after step (e) are not far from straight lines, which means that no particular size of pores is favored within the radii of about 150 to 3000 Å (15-300 nm).

In order to narrow the pore size distribution, the beads resulting from step (e) are subjected to salt impregnation and heating according to step (f), then washed according to step (g).

The salts used in step (g) are selected from halides and chalcogenides of metals of groups I, II and III of the Periodic Table ; they preferably include NaCl, BACl$_2$, CaCl$_2$ and Al$_2$(SO$_4$)$_3$. Normally the beads are infused with aqueous solutions of these salts and then dried to remove the water at from about 90-150°C at ambient pressure or under vacuum. The concentration of said aqueous solutions may be between from about 5% to 30% by weight. Since the aim is to obtain beads with pores containing dry salts in a proportion ranging from about 20 to 95% by weight (expressed as weight of salt per weight of beads + salt), the amount of aqueous solutions used for infusion depends on the salt concentration in said solution, much of it relative to the beads being used if the concentration is low, and less of it if the concentration is high. In some cases two or more salts were used simultaneously (see Table IV thereafter). Usually, depending on intrinsic solubility of the salts in water, weight ratio of dried beads to salts used for impregnation range from about 0.05 to 4.5.

Once the beads impregnated with the salts are fully dry, they are subjected to heating under air in a furnace, the rate of heating is about 1-10°C/min up to a temperature of about 600-800°C. Then the temperature is maintained for one or several hours (e.g. 1-6 hrs), knowing that long heating times increase the occurrence of pores in the 10-50 nm (100-500 A) range, and the whole is allowed to cool. Removal of the salts is effected by repeated washing with water, either at room temperature or at the boil until no salt is present in the pores.

After salt removal, the beads are again dried in air at 100-200°C. Heating treatments to 750°C or more may result in a degree of pore collapsing due to glass densification unless some special treatments such as hydrothermal or oxidation with halogen or oxygen are applied.

Fig 2 illustrates the effect of the salt heat treatment. Curve D represents the pore size distribution for a given kind of bead material and curve S5 represents the pore size distribution for the same material after 4 hrs at 750°C in the presence of more than 90% of salt. Obviously normalization of the pore size in the 50-60 nm (500-600 angstrom) range has occurred to a considerable extent.

It is also interesting to note that the pores of a given size may not be distributed regularly in the bead body; actually, the larger pores are generally found in the beads near to their periphery, smaller pores being rather concentrated near the center.

In addition to the carrying out of the various steps and modifications disclosed in connection with the method of the invention (see claim 1), the present beads can be subjected to additional treatment for improving their properties. For instance, they can be dehydroxylated by heating with chlorine/inert gases mixtures. Dehydroxylation may be important to decrease the tendency to pore collapsing at high temperature upon heating to promote crystallization to a glass-ceramic structure. Such structure is advantageous for use of the beads as chromatographic materials. Conditions for chlorine treatments are detailed in the experimental part.

Other final treatments involve hydrothermal treatments, i.e. using water diluted mineral acid and bases under ambient conditions or moderate temperature and pressure conditions. Details about such further treatments are given in the experimental part which follows.

Experimental Section (Examples)

i) Preparation of oligomeric metaloxane precursors

Silicon tetraethoxide (500 g, 2.4 moles) was dissolved in 136.3 g ETOH and 18.7 g of 0.1 HCl in ethanol (2.4 mmoles) and 8.64 g H$_2$O (0.5 moles) were successively added under stirring. Prehydrolysis of the silicon ethoxide was initiated by heating the solution (solution A) to 60°C for 1/2 hr after which it was cooled to about 0°C.

A solution B was prepared by admixing successively under P$_2$O$_5$ dry nitrogen (glove box) : 29.08 g (0.1 mole) of zirconium isopropoxide, 24.21 g (0.1 mole) of titanium tetraethoxide, 50.28 g of aluminum di-sec.butoxide-ethyl-acetoacetate, 20 g of ethanol and 20 g of isopropanol. The solution was heated to reflux for 15 min after which it was cooled to about 0°C and mixed with solution A.

The overall solution A + B was heated progressively to 130° under a stream of nitrogen, whereby distillation occurred ; water distilled off together with the volatile solvents to provide 552.7 g of prehydrolyzed oligomeric solution labeled PG3 (7).

The above preparation was repeated using variable amounts of water for prehydrolysis. The products obtained are listed in the Table below (Table 1). Note that in all cases, the respective weight proportions of the metal components (expressed as their oxides $SiO_2$, $ZrO_2$, $TiO_2$ and $Al_2O_3$) were 85 : 5 : 5 : 5.

### TABLE 1

| PG3 | moles of $H_2O$ / $Si(OE+)_4$ | Precursor condition |
|---|---|---|
| (1) | 0.5 | viscous liquid |
| (2) | 1 | viscous liquid |
| (3) | 1.5 | solid |
| (4) | 2 | precipitated |
| (5) | 0.25 | flowing liquid |
| (6) | 0.1 | flowing liquid |
| (7) | 0.2 | flowing liquid |
| (8) | 0.3 | flowing liquid |

ii) Preparation of metaloxane beads by dispersing the precursor solution into insolubilizing media to form oligomer droplets which are subsequently gelled and hardened.

A volume of 75 ml of precursor solution (PG3) was diluted with 56.3 mil of tert.amyl-alcohol (tam) and 18.8 ml of cyclo-hexane. This was slowly added dropwise at room temperature to an agitated solution (650-800 rpm) of 1300 g of water, 20 ml of Tween-20 (or 40) surfactant solution and 15 ml of ethanol which had been premixed beforehand for about 15 min. This addition resulted in the formation of a suspension of droplets (milky suspension) which was left under agitation for about 5-10 min to homogeneize.

Then a diluted aqueous ammonia solution was added under stirring in 40 min to promote gelation of the droplets into beads and, afterwards, stirring was continued for 1-6 hours to complete bead hardening.

Table II below shows the conditions under which this bead formation was brought about, i.e. the kind of precursor PG3 used (see Table I) and the quantity of ammonia (25% solution) and water added to effect gelation and hardening, the last column identifies by a code the hardened bead material obtained.

The suspension of hardened beads was allowed to stand overnight and the supernatant liquid (cloudy) was syphoned off and replaced by ethanol. This decanting, syphoning and rinsing with ethanol was repeated twice.

iii) Drying of the beads (hypercritical drying)

After decanting the alcohol wash for the third time, the mass of beads was moistened with alcohol into a paste-like slurry. This slurry was placed in an autoclave which was filled with $N_2$ up to a pressure of 80-90 bar at 20°C. Then the autoclave was heated at a rate of 1.5°C/min up to 280°C (about 1-1.5 hrs) whereby the pressure rose to about 210-230 bar. After 1 hr standing under the above conditions, the autoclave was decompressed at 280°C at a rate between about 1-50 bar/hr until the residual pressure was 5 bar. Then it was allowed

## TABLE II

| Precursor PG3 | NH$_4$OH 25% (ml) | Water (ml) | Beads (code) | Yield (g) |
|---|---|---|---|---|
| (6) | 100 | 200 | q01 | 39.5 |
| (6) | 200 | 100 | q02 | - |
| (7) | 90 | 210 | s01; | 13.7 |
| (7) | 75 | 225 | v01 | 15.3 |
| (7) | 150 | 150 | v02 | 16.9 |
| (7) | 225 | 75 | v03 | - |
| (7) | 210 | 90 | s02; | 12.6 |
| (5) | 100 | 200 | p01 | 11.1 |
| (5) | 200 | 100 | p02 | - |
| (8) | 90 | 210 | t01 | 16.5 |
| (8) | 210 | 90 | t02 | 16.2 |
| (1) | 50 | 10 | n | - |
| (2) | 50 | 10 | 1 | 14.3 |
| (3) | 50 | 10 | PG3(3)1 | 11 |
| 0.5(1) + 0.5(7) | 90 | 210 | w01 | 17.1 |

to cool to room temperature whereby the pressure was relieved. The beads obtained were substantially spherical with a diameter generally ranging from about 10 to 100 µm.

Alternatively, the bead material was vacuum-dried in a rotavapor apparatus or drained on filter papers under suction.

Table III summarizes the values of the pores volumes measured on some of the beads listed in Table II after hypercritical drying. The pores volumes were measured either with a Carlo ERBA porosimeter type AG/65 (mercury intrusion technique) from Carlo ERBA S.p.A., Milano, Italy, or by isopropanol infusion technique via a micropipette ; the end point (occurrence of tacking) was however difficult to determine and required much experimentation and skill.

Table III also gives pore volume values for some of the bead samples after being subjected to a post-drying heating period in air at 700-750°C.

The values within brackets include the "dead" pore volume recorded initially in each measurement.

## TABLE III

| Beads | Heat treated | Pore volumes (ml/g) | |
|-------|--------------|---------------------|---|
| w01 | – | 1.91 | (2.53) |
| s01 | – | 3.19 | (4,32) |
| n | – | 2.4 | (2.87) |
| p02 | + | 2.36 | (2.74) |
| s01 | + | 3.44 | (4.52) |
| s02 | + | 2.74 | (4.0) |
| 1 | – | 1.62 | – |

The statistical distribution of the pore volumes for bead samples s01 (curve A), s01 after heat treatment (curve B) and s02 after heat treatment (curve C) is shown in fig 1. In fig 1 the "X" axis indicates the pore volumes on a logarithmic scale and the "Y" axis indicates the percent pore volume distribution. Therefore curves A, B and C correlate the relative proportion of pore volumes with a given range of values. It can be seen that the distribution is rather linear, i.e. there is practically no range of pore volumes which is favored at this stage.

iv) Impregnation with salts and heat treatment.

In these experiments, a given weight of beads was impregnated with an aqueous solution of salt of concentration 5-30% by weight and thereafter fully dried (90-150°C). Then the impregnated beads were placed in a horizontal tube-furnace (alumina boat) and heated in air (rate 1°C/min) up to a maximal temperature (680-800°C), left there for a period (2-4 h) and allowed to cool. Then the beads were washed repeatedly with water (boiling water or 20°C water) until all salts had been removed, after which the beads were dried again in air and the porosity measured.

Table IV below summarizes some of the results. In some cases the beads were degassed at 150°C under vacuum ; these are marked "dg". Table II successively indicates a "S" (salt) code number defining the experiment, the code for the beads used, the salt(s) used for impregnation and weight % and temperature of the heat treatment.

## TABLE IV

| Exp. No. | Beads | Salt (%) | Temperature (°C) | Remarks |
|---|---|---|---|---|
| S5 | p02 dg | NaCl (92.5) | 750 (4 h) | |
| S8 | v01 dg | NaCl (92.9) | 680 (2 h) | |
| S9 | v02 dg | NaCl (92.9) | 680 (2 h) | |
| S10 | v03 dg | NaCl (92.9) | 680 (2 h) | |
| S11 | v01 dg | NaCl (25.5) | 800 (2 h) | |
| S12 | v02 dg | NaCl (24.8) | 800 (2 h) | |
| S14 | v03 dg | NaCl (24.8) | 800 (2 h) | |
| S15 | t01 dg | NaCl (24.3) | 800 (2 h) | |
| S16 | t01 | NaCl (24.6) | 800 (2 h) | +1 hr 550°C |
| S17 | t02 | NaCl (24.8) | 800 (2 h) | |
| S18 | v02 | $5\ BaCl_2/2NaCl$ (20) | 680 (2 h) | |
| S19 | v02 | $5\ CaCl_2/2NaCl$ (20) | 680 (2 h) | |
| S20 | v02 | $Al_2(SO_4)_3$ (20) | 680 (2 h) | |
| S31 | w01 dg | NaCl (28.6) | 700 (2 h) | +2 hrs at 400°C |
| S32 | v02 dg | NaCl (28.6) | 700 (2 h) | |
| S33 | w01 dg | NaCl (28.3) | 700 (2 h) | |
| S34 | t01 dg | NaCl (28.4) | 700 (2 h) | |
| S50 | w01 | $9\ NaCl/1\ BaCl_2$(45.3) | — (2 h) | 16 hrs at 125°C |
| S501 | w01 | $9\ NaCl/1\ BaCl_2$(45.3) | 700 (2 h) | |
| S502 | w01 | $9\ NaCl/1\ BaCl_2$(45.3) | 725 (2 h) | |
| S503 | w01 · | $9\ NaCl/1\ BaCl_2$(45.3) | 700 (2 h) | |
| | | | 725 (2 h) | |
| S504 | w01 | $9\ NaCl/1\ BaCl_2$(45.3) | 700 (2 h) | |
| | | | 780 (2 h) | |
| S51 | w01 | $NaCl/BaCl_2$ (46) | — — | 16hrs at 125°C |
| S511 | w01 | $NaCl/BaCl_2$ (46) | 700 (2 h) | |
| S513 | w01 | $NaCl/BaCl_2$ (46) | 700 (2 h) | |
| | | | 725 (2 h) | |
| S514 | w01 | $NaCl/BaCl_2$ (46) | 700 (2 h) | |
| | | | 770 (2 h) | |

Fig 2 shows on the same type of diagram as fig 1 the results of the salt impregnation heat treatment on the pores radius distribution. Curve D represents the case of the p02 beads before salt impregnation ; curve S5 represents the S5 experiment reported in Table IV, i.e. the p02 beads subjected to 4 h of heating at 750° with 92,5% of salt. It can be seen that after the treatment about 50% of the pores are in the 25-80 nm (250-800) Å range. Curve S12 illustrates the results of experiment S12 in Table IV.

Table V summarizes the pore size distribution in % for a given pore radius range, for a number of samples having undergone salt impregnation. The table also gives the corresponding pore volumes and the specific surface area of the beads

TABLE V

| S Code | Bead code | Pore diameter range nm ((Å)) | Pore volume (ml/g) and % distribution in that range | | Surface area (m²/g) |
|---|---|---|---|---|---|
| 8 | v01 | 32 (320) | 0.48 | 40% | -- |
| 9 | v02 | 30 (300) | -- | 50% | -- |
| 10 | v03 | 30 (300) | 0.84 | 50% | -- |
| 12 | v02 | 35 (350) | 0.8 | 60% | 6.5 |
| 16 | t01 | 35 (350) | 0.92 | 50% | 10.0 |
| 17 | t02 | 55 (550) | 2.09 | 65% | 22.7 |
| 18 | v02 | 30 (300) | 1.96 | 65% | 84.4 |
| 19 | v02 | 30 (300) | 1.83 | 55% | -- |
| 20 | v02 | 22 (220) | 1.13 | 45% | -- |
| 31 | w01 | 21 (210) | 2.23 | 55% | -- |
| 32 | v02 | 19 (190) | 2.32 | 60% | -- |
| 33 | w01 | 21 (210) | 2.61 | 45% | -- |
| 34 | t01 | 19 (190) | 2.3 | 40% | -- |
| 501 | w01 | 16 (160) | 1.5 | 50% | -- |
| 502 | w01 | 26 (260) | 1.5 | 70% | -- |
| 503 | w01 | 33 (330) | 0.9 | 70% | -- |
| 511 | w01 | 165 (165) | 1.6 | 60% | -- |
| 513 | w01 | 32 (320) | 1.0 | 70% | -- |

From the above results, it can be seen that using high temperatures and prolonged heating in the salt impregnation treatment tends to bring the pore cross-sectional sizes in the 10-50 nm (100-500 Å) range.

v) Hydrothermal treatments.

In order to further decrease the affinity of the present beads toward biological molecules and reduce the adsorption capacity, lots were heated under nitrogen pressure for 2-6 hrs with moist alcohol optionally containing small amounts of reactive minerals such as HCl, NaOH or HF. The initial pressures ranged from about 15-150 bar, the heating temperatures from 120 to 250°C and the pressures at heating temperatures from about 40 to 250 bar.

As an Example, beads v01 (9 g) were heated for 2 hours at 200°C with 150 ml of $H_2O$ under 200 bar. After this treatment, the adsorption of blue dextran or human serum albumin (HSA) was less than 4% ; the adsorption of phenol was zero.

The adsorption capacity was also strongly reduced by NaOH treatment at room temperature. For instance v02 beads with pores normalized by treatment with NaCl at 700°C (see S32 in Table IV) had an adsorption capacity of 51% for HSA. This was reduced to 14% after treatment of the beads with 0.1N NaOH at room temperature.

vi) Dehydroxylation by chlorine-argon mixture of hyper-critically dried beads.

The samples were heated in tube-furnaces either in air or under a mixture of chlorine gas and argon according to the heating treatment programmes listed below (HT2, HT3, HT4).

$$HT2 \; : \; 20 \; - \; 1°C \; mn^{-1} \; - \; 600°C, \; 1 \; h \; : \; static \; air$$
$$600 \; - \; 1°C \; mn^{-1} \; - \; 500°C, \; 16 \; h \; : \; static \; air$$
$$500 \; - \; 2°C \; mn^{-1} \; - \; 800°C, \; 0h \; : \; 6\% \; Cl_2-Ar$$
$$800 \; - \; 2°C \; mn^{-1} \; - \; 1000°C, \; 4 \; h \; : \; Ar$$

$$\text{HT3} : 20 - 3°\text{C mn}^{-1} - 600°\text{C, 1 h : static air}$$
$$600 - 3°\text{C mn}^{-1} - 500°\text{C, 16 h : static air}$$
$$500 - 3°\text{C mn}^{-1} - 700°\text{C, 0h. : 6\% Cl}_2\text{-Ar}$$
$$700°\text{C, 1 h : Ar}$$

$$\text{HT4} : 20 - 1°\text{C mn}^{-1} - 600°\text{C, 2 h : static air}$$
$$600 - 1°\text{C mn}^{-1} - 450°\text{C, 16 h : static air}$$
$$450 - 2°\text{C mn}^{-1} - 750°\text{C, 0h : 6\% Cl}_2\text{-Ar}$$
$$750 - 1°\text{C mn}^{-1} - 935°\text{C, 2 h : 50\% Ar-50\% O}_2.$$

Table VI summarizes the results obtained from the dehydroxylation treatment in this Table, the pore volumes are reported as in Table III. It should be first noted that heating the present beads to temperatures of 800-1000° normally leads to a considerable degree of densification and pore plugging. The present chlorine treatment (terminated on one occasion by an oxidizing treatment ; see HT4 last step) obviates this drawback. Instead, the beads will crystallize to same extent around 1000°C into a glass-ceramic material, the porosity not being substantially altered.

### TABLE IV

| Beads material | Heat treatment | Pore volume | | Pore cross-sectional dimension nm ((Å)) and % distribution | | |
|---|---|---|---|---|---|---|
| s01 | HT2 | 0.32 | (0.54) | 29 | (290) | 55% |
| s02 | HT2 | 1.09 | (1.61) | 31 | (310) | 65% |
| s01 | HT3 | 1.71 | (1.71) | 15 | (150) | 20% |
| s02 | HT4 | 2.81 | (3.76) | 15 | (150) | 20% |
| | | | | 200 | (2000) | 40% |
| v02 | HT4 | 1.1 | (1.8) | 12,5 | (125) | 40% |
| v02 | HT4+965° | | | | | |
| | 2 h (air) | 0.46 | (0.9) | 13 | (130) | 40% |
| | +HF/$H_2SO_4$/$H_2O$ | 1.1 | (1.7) | 13 | (130) | 40% |

## Claims

1. A method for making porous mineral beads suitable for chromatographic separation techniques of substantially uniform spherical shape and controlled pore radius distribution and having a homogeneous metaloxane structure involving the oxides of the metals silicon, zirconium, titanium and aluminum, which comprises the steps of :

a) dissolving an alkoxide of silicon in an acidified aqueous-organic solvent mixture and effecting a prehydrolysis of the silicon compound ;

b) adding thereto a solution of alkoxides of Zr, Ti and Al in a water-soluble organic solvent and subjecting the whole mixture to heat and distillation until substantially all volatiles components thereof have been removed, whereby a metaloxane precursor solution is obtained ;

c) diluting the precursor solution with a solution of a water compatible organic solvent and a water-insoluble hydro-carbon soluble in said compatible organic solvent and slurrying this dilution into droplets by adding it into an excess of an aqueous phase ;

d) converting said droplets into spherical gelled beads by heating to 40-65°C, or adding ammonia to the slurry, whereby hydrolysis is resumed with consequent formation of a gelled metaloxane structure ;

e) drying the gelled beads at room or higher temperatures, whereby highly porous dried beads are obtained with pore volumes greater than 1 cc g$^{-1}$ :

f) infusing into the pores of the dried beads an aqueous solution of a water-soluble mineral salt selected from halides and chalcogenides of metals of columns I, II and III of the Periodic Table and heating the impregnated beads at temperatures from 500 to 800°C.

g) treating the beads with water to wash off the salts and isolating the washed beads.

2. The method of claim 1, in which the mole quantities of the Zr, Ti and Al components for one mole of silicon component, are in the range of 0.03 to 1.5 moles.

3. The method of claim 1, in which the alkoxides are lower alkoxides selected from methyl, ethyl, propyl, isopropyl and butyl alkoxides.

4. The method of claim 3, in which the Al compound is selected from aceto-acetate chelates of Al-di- (sec-.alkoxides), and bidentate chelates of Al-di-(alkoxides).

5. The method of claim 1, in which the prehydrolysing aqueous organic solvent in step (a) is an aqueous lower alcohol solution acidified with hydrogen chloride.

6. The method of claim 5, in which the mole ratio of the water in the acidified aqueous alcohol solution to the total of the silicon alkoxide is 0.05 to 1.5.

7. The method of claim 1, in which the degree of prehydrolysis of the metal alkoxides achieved in step b) expressed in mole % is from 2 to 50.

8. The method of claim 1, in step c) of which 1 to 2 parts (v/v) of diluting mixture is used for 0.1 to 10 parts of the precursor solution.

9. The method of claim 8, in which the diluting mixture contains tert.amyl alcohol and other hydrophilic solvents, and organic hydrophobic solvents.

10. The method of claim 1, in step c) of which the aqueous phase is a water or a water solution of a lower alcohol containing surfactant agents like polyoxyethylene sorbitanmonolaurate and related compounds permitting the formation of perfectly spherical droplets.

11. The method of claim 10, in which the volume ratio of the diluted precursor to the aqueous phase is 1/5 to 1/20.

12. The method of claim 1, in which the volume ratio of the ammonia solution used in step d) and the diluted precursor is between 0 and 3.

13. The method of claim 1, in which step e) is effected under hypercritical drying conditions under pressures ranging from 100 to 250 bar.

14. The method of claim 1, in which step e) is effected under atmospheric pressure.

15. The method of claim 13, in which step e) is effected under an atmosphere of alcohol or $CO_2$.

16. The method of claim 13, in which the temperature in step e) is between 200 and 350°C.

17. The method of claim 16, in which, after maintaining the temperature and pressure for 0.5 to 2 hrs, the pressure is relieved at a rate of 1 to 50 bar/hr until it is 5 bar, after which the temperature is lowered to room temperature.

18. The method of claim 1, in which the concentration of the solution of salts used in step f) is between 5 and 30% by weight.

19. The method of claim 18, in which the salts used are selected from NaCl, $BaCl_2$, $CaCl_2$ and $Al_2(SO_4)_3$.

20. The method of claim 18, in which the impregnated porous beads are heated at the rate of 1-10°C/min in air.

21. The method of claim 18, in which, prior to impregnation, the beads are dried between 90 and 150°C under pressure ranging from 0.013-1.013 bar (10 to 760 Torr).

22. The method of claim 18, in which the weight ratio (I) of dried beads before impregnation to that of the salts, taken as in the dry state, is from 0.05 to 4.5.

23. The method of claim 22, in which beads having pores ranging from about 10-4,000 nm (100 to 40.000 Å) in random distribution are impregnated with aqueous NaCl, (I) being 0.082, then heated 4 hrs at 750°C, then cooled and washed with $H_2O$, whereby the porous structure now has about 60% of pores in the 35-50 nm (350-500 Å) range.

24. The method of claim 1, in which increasing heating time and temperature in step f) tends to increase the amount of pores in the 10-50 nm (100-500 Å) range.

25. The method of claim 1, in which the pore radii follow a radial distribution in the beads, the larger pores being near the periphery.

26. The method of claim 1, in which the average pore radii before salt impregnation is a function of prehydrolysis conditions pertaining to steps a) and b), the magnitude of pore size being inversely related to the amount of water added in step a).

27. The method of claim 1, whereby after step g) the dried products having defined pore radii are subjected to chlorine gas treatment at temperature in the range 500 to 1200°C to reduce the OH content at the surface of the pores.

28. The method of claim 1, whereby after step g) the dried products are subjected to aqueous hydrothermal treatment at pressures between 9.08-318 bar (10 and 350 atm) and at temperatures between 100 and 350°C to modify the OH content and metaloxane configuration at the pore surfaces.

29. The method of claims 1 and 27, whereby a final heating schedule (500 to 1200°C) is implemented for sufficient time to induce crystallization of the glass matrix, giving a glass-ceramic material, without significantly reducing the pore radius and the pore volume.

## Patentansprüche

1. Verfahren zur Herstellung poröser, mineralischer Perlen von im wesentlichen gleichförmiger, kugelförmiger Gestalt und kontrollierter Porenradiusverteilung, die für chromatographische Trennungsverfahren geeignet sind und eine homogene Metalloxanstruktur aufweisen, welche die Oxide der Metalle Silicon, Zirkon, Titan und Aluminium umfaßt, dadurch gekennzeichnet, daß es folgende Schritte umfaßt :

a) Auflösen eines Alkoxids von Silicon in einer gesäuerten, wässrigen, organischen Lösungsmittelmischung und Durchführung einer Vorhydrolyse der Siliconverbindung,

b) Hinzufügen einer Lösung von Alkoxiden von Zr, Ti und Al in einem wasserlöslichen organischen Lösungsmittel und Unterziehung der gesamten Mischung einer Wärme- und Destillationsbehandlung, bis im wesentlichen alle flüchtigen Bestandteile davon entfernt wurden, wodurch eine Metalloxanvorläuferlösung erhalten wird,

c) Verdünnen der Vorläuferlösung mit einer Lösung eines mit Wasser verträglichen, organischen Lösungsmittel und eines wasserunlöslichen, in dem verträglichen organischen Lösungsmittel löslichen Kohlenwasserstoffs, und Aufschlämmen dieser Verdünnung in Tröpfchen, indem sie in einen Überschuß einer wässrigen Phase gegeben wird,

d) Umwandlung der Tröpfchen in kugelförmige gelierte Perlen durch Erhitzung auf 40 bis 65°C oder durch Hinzufügen von Ammoniak zu der Aufschlämmung, wodurch die Hydrolyse mit der resultierenden Bildung einer gelierten Metalloxanstruktur wieder aufgenommen wird,

e) Trocknen der gelierten Perlen bei Raum- oder höheren Temperaturen, wodurch sehr poröse, getrocknete Perlen mit Porenvolumen von mehr als 1 cm$^3$ g$^{-1}$ erhalten werden.

f) Infundieren einer wässrigen Lösung eines wasserlöslichen mineralischen Salzes ausgewählt aus Halogeniden und Chalkogeniden der Metalle der Reihen I, II und III des Periodensystems in die Poren der getrockneten Perlen und Erhitzen der imprägnierten Perlen bei Temperaturen von 500 bis 800°C,

g) Behandlung der Perlen mit Wasser, um die Salze wegzuwaschen und Isolierung der gewaschenen Perlen.

2. Verfahren nach Anspruch 1, dadurch gekennzeichnet, daß die Molmengen der Zr-, Ti- und Al-Komponenten für ein Mol der Siliconkomponente im Bereich von 0,03 bis 1,5 Mol liegen.

3. Verfahren nach Anspruch 1, dadurch gekennzeichnet, daß die Alkoxide niedrige Alkoxide ausgewählt aus Methyl-, Ethyl-, Propyl-, Isopropyl und Butylalkoxiden sind.

4. Verfahren nach Anspruch 3, dadurch gekennzeichnet, daß die Al-Komponente ausgewählt ist aus den Acetoacetatchelaten von Al-di-(sek. Alkoxiden) und Bidentatchelaten von Al-di-(Alkoxiden).

5. Verfahren nach Anspruch 1, dadurch gekennzeichnet, daß das vorhydrolysierende wässrige, organische Lösungsmittel in Schritt (a) eine mit Wasserstoffchlorid gesäuerte wässrige niedrige Alkohollösung ist.

6. Verfahren nach Anspruch 6, dadurch gekennzeichnet, daß das Molverhältnis des Wassers in der gesäuerten wässrigen Alkohollösung zu der Gsamtmenge des Siliconalkoxids 0.05 bis 1,5 beträgt.

7. Verfahren nach Anspruch 1, dadurch gekennzeichnet, daß der in Schritt b) erzielte Grad der Vorhydrolyse der Metallalkoxide, in Mol-% ausgedrückt, 2 bis 50 beträgt.

8. Verfahren nach Anspruch 1, dadurch gekennzeichnet, daß in dessen Schritt c) 1 bis 3 Teile (Volumen/Volumen) der verdünnenden Mischung für 0,1 bis 10 Teile der Vorläuferlösung verwendet werden.

9. Verfahren nach Anspruch 8, dadurch gekennzeichnet, daß die verdünnende Lösung tert.-Amylalkohol und andere hydrophile Lösungsmittel und organische hydrophobe Lösungsmittel enthält.

10. Verfahren nach Anspruch 1, dadurch gekennzeichnet, daß in dessen Schritt c) die wässrige Phase Wasser oder eine Wasserlösung eines einen niedrigen Alkohol enthaltenden oberflächenaktiven Mittels wie Polyoxyethylen, Sorbitanmonolaurat und verwandte, die Bildung von vollkommen kugelförmigen Tröpfchen gestattende Verbindungen ist.

11. Verfahren nach Anspruch 10, dadurch gekennzeichnet, daß das Volumenverhältnis des verdünnten Vorläufers zu der wässrigen Phase 1 : 5 bis 1 : 20 beträgt.

12. Verfahren nach Anspruch 1, dadurch gekennzeichnet, da das Volumenverhältnis der in Schritt d) verwendeten Ammoniaklösung und dem verdünnten Vorläufer zwischen 0 und 3 beträgt.

13. Verfahren nach Anspruch 1, dadurch gekennzeichnet, daß dessen Schritt e) unter hyperkritischen Trocknungsbedingungen bei Drücken von 100 bis 250 bar durchgeführt wird.

14. Verfahren nach Anspruch 1, dadurch gekennzeichnet, daß dessen Schritt e) unter atmosphärischem Druck durchgeführt wird.

15. Verfahren nach Anspruch 13, dadurch kennzeichnet, daß dessen Schritt e) unter einer Atmosphäre von Alkohol oder $CO^2$ durchgeführt wird.

16. Verfahren nach Anspruch 13, dadurch gekennzeichnet, daß die Temperatur in Schritt e) zwischen 200 und 350°C beträgt.

17. Verfahren nach Anspruch 16, dadurch gekennzeichnet, daß nach Aufrechterhaltung von Temperatur und Druck während 0,5 bis 2 Stunden der Druck in einem Ausmaß von 1 bis 50 bar/Std. entlastet wird, bis er 5 bar beträgt, wonach die Temperatur auf Raumtemperatur gesenkt wird.

18. Verfahren nach Anspruch 1, dadurch gekennzeichnet, daß die Konzentration der in Schritt f) verwendeten Salzlösung zwischen 6 und 30 Gew.-% liegt.

19. Verfahren nach Anspruch 18, dadurch gekennzeichnet, daß die verwendeten Salze ausgewählt sind aus NaCl, BaCl$_2$, CaCl$_2$ und Al$_2$(SO$_4$)$_3$.

20. Vefahren gemäss Anspruch 18, dadurch gekennzeichnet, dass man die porösen, mit Flüssigkeit imprägnierten Perlen an der Luft trocknet, in einem Ausmass von 1-10°C/Min.

21. Verfahren nach Anspruch 18, dadurch gekennzeichnet, daß die Perlen vor der Imprägnierung bei einer Temperatur zwischen 90 und 150°C bei Drücken von 0,013 bis 1,013 bar (10 bis 760 Torr) getrocknet werden.

22. Verfahren nach Anspruch 18, dadurch gekennzeichnet, daß das Gewichtsverhältnis (1) der getrockneten Perlen vor der Imprägnierung zu dem der Salze, als im trockenen Zustand betrachtet, von 0.05 bis 4,5 beträgt.

23. Verfahren nach Anspruch 22, dadurch gekennzeichnet, daß die Perlen, welche Poren im Bereich von etwa 10 bis 4000 nm (100 bis 40,000 Å) in Zufallsverteilung aufweisen, mit wässrigem NaCl imprägniert sind, wobei (I) 0,082 ist, dann 4 Stunden lang bei 750°C erhitzt, dann gekühlt und mit H$_2$O gewaschen werden, wodurch die 60% der Poren der porösen Struktur im 35 bis 50 nm (350 bis 500 Å) Bereich liegen.

24. Verfahren nach Anspruch 1, dadurch gekennzeichnet, daß die steigende Erhitzungszeit und Temperatur in Schritt f) dazu führt, die Menge an Poren in dem 10 bis 50 nm (100 bis 500 Å) Bereich zu erhöhen.

25. Verfahren nach Anspruch 1, dadurch gekennzeichnet, daß die Porenradien einer radialen Verteilung in den Perlen folgen, wobei sich die größeren Poren in der Nähe des Umfangs befinden.

26. Verfahren nach Anspruch 1, dadurch gekennzeichnet, daß die durchschnittlichen Porenradien vor der Imprägnierung mit Salz von den Schritt a) und b) betreffenden Vorhydrolysebedingungen abhängen, wobei die Größenordnung der Porengröße umgekehrt mit der Menge an in Schritt a) zugefügten Wassers zusammenhängt.

27. Verfahren nach Anspruch 1, dadurch gekennzeichnet, daß nach Schritt g) die getrockneten, definierte Porenradien aufweisenden Produkte einer Chlorgasbehandlung bei Temperaturen von 500 bis 1200° unterworfen werden, um den OH-Gehalt an der Oberfläche der Poren zu verringern.

28. Verfahren nach Anspruch 1, dadurch gekennzeichnet, daß die getrockneten Produkte nach Schritt g) einer wässrigen hydrothermalen Behandlung bei Drücken zwischen 4,08 bis 318 bar (10 und 350 atm) und bei Temperaturen zwischen 100 und 350°C unterworfen werden, um den OH-Gehalt und die Metalloxankonfiguration an den Porenoberflächen zu modifizieren.

29. Verfahren nach Anspruch 1 und 27, dadurch gekennzeichnet, daß eine letzte Erhitzung während einer ausreichenden Zeit durchgeführt wird, um die Kristallisierung der Glasmatrix herbeizuführen, was zu einem glaskeramischen Material führt, ohne den Porenradius und das Porenvolumen wesentlich zu verringern.

## Revendications

1. Procédé pour fabriquer des perles minérales poreuses s'appliquant aux techniques de séparation chromatographique de forme pratiquement sphérique et dont les pores sont de rayons compris dans une gamme contrôlée, ces perles présentent une structure métalloxanique homogène incluant des oxydes de silicium, zirconium, titane et aluminium, ce procédé comportant des étapes suivant lesquelles :

(a) on dissout un alcoxyde de silicium dans un mélange acidifié d'eau et d'un solvant organique et on effectue une préhydrolyse du composé de silicium ;

(b) on ajoute au mélange une solution d'alcoxydes de Zr, Ti et Al dans un solvant organique hydrosoluble et on chauffe pour distiller le mélange jusqu'à élimination de tous ses constituants volatils, ce qui fournit une solution de précurseur métalloxanique ;

(c) on dilue cette solution précurseur par une solution d'un hydrocarbone insoluble dans l'eau dans un solvant organique hydrocompatible et on émulsifie cette dilution sous forme de gouttelettes en suspension dans un excédent d'une phase aqueuse ;

(d) on transforme ces gouttelettes en perles gélifiées sphériques par chauffage à 40-65°C, ou par adjonction d'ammoniaque à l'émulsion, ce qui fait se poursuivre l'hydrolyse avec formation d'une structure métalloxanique gélifiée ;

(e) on sèche les perles gélifiées à température ambiante ou au-dessus, ce qui occasionne la formation de perles sèches de haute porosité, le volume des pores dépasssant 1 cc/g ;

(f) on fait infuser dans les pores des perles sèches une solution aqueuse d'un sel minéral hydrosoluble choisi parmi les halogénures et chalcogénures des métaux des colonnes I, II et III du Tableau Périodique et on chauffe les perles ainsi imprégnées entre 500 et 800°C ;

(g) on lave les perles à l'eau pour enlever les sels et on sépare les perles lavées.

2. Procédé suivant la revendication 1, dans lequel le nombre de moles des composants d'Al, Ti et Zr pour une mole de composé de silicium est compris dans la gamme de 0,03 à 1,5 moles.

3. Procédé suivant la revendication 1, dans lequel les alcoxydes sont des alcoxydes inférieurs choisis parmi les alcoxydes méthylique, éthylique, propylique, isopropylique et butylique.

4. Procédé suivant la revendication 3, dans lequel le composé d'Al est choisi parmi les chélatants acétoacétate de di-(sec.alcoxydes) d'Al et les chélatants bidentés des di-alcoxydes d'Al.

5. Procédé suivant la revendication 1, dans lequel le solvant aquo-organique préhydrolysant de l'étape (a) est une solution aqueuse d'un alcool inférieur acidifié à l'acide chlorhydrique.

6. Procédé suivant la revendication 5, dans lequel le rapport molaire entre l'eau de la solution aquo-alcoolique acidifiée et l'alcoxyde de silicium total est de 0,05 à 1,5.

7. Procédé suivant la revendication 1, dans lequel le taux de préhydrolyse des alcoxydes métalliques à l'étape (b) exprimé en % est de 2 à 50.

8. Procédé suivant la revendication 1, dans l'étape (c) duquel on utilise 1 à 2 parties (v/v) de mélange de dilution pour 0,1 à 10 parties de solution précurseur.

9. Procédé suivant la revendication 1, dans lequel le mélange de dilution contient de l'alcool tert.amylique, d'autres solvants hydrophiles et des solvants organiques hydrophobes.

10. Procédé suivant la revendication 1, dans l'étape (c) duquel la phase aqueuse est de l'eau ou une solution aqueuse à un alcool inférieur contenant des surfactants tels que le monolaurate de polyoxy-éthylène-sorbitanne et les composés apparentés permettant la formation de gouttelettes bien sphériques.

11. Procédé suivant la revendication 10, dans lequel le rapport volumétrique du précurseur dilué à la phase aqueuse est de 1/5 à 1/20.

12. Procédé suivant la revendication 1, dans lequel le rapport en volume de la solution ammoniacale utilisée à l'étape (d) et le précurseur dilué est situé entre 0 et 3.

13. Procédé suivant la revendication 1, dans lequel on effectue l'étape (a) dans des conditions de séchage hypercritiques sous des pressions allant de 100 à 250 bar.

14. Procédé suivant la revendication 1, dans lequel on effectue l'étape (e) à pression atmosphérique.

15. Procédé suivant la revendication 13, dans lequel on effectue l'étape (e) sous atmosphère d'alcool ou de $CO_2$.

16. Procédé suivant la revendication 13, dans lequel la température à l'étape (e) se situe entre 200 et 350°C.

17. Procédé suivant la revendication 13, dans lequel après avoir maintenu température et pression 0,5 à 2 h, on relâche cette pression jusqu'à 5 bar au taux de 1-50 bar/h, puis on laisse refroidir à température ambiante.

18. Procédé suivant la revendication 1, dans lequel la concentration pondérale des sels utilisés à l'étape (f) est située entre 5 et 30°C.

19. Procédé suivant la revendication 18, dans lequel on choisit ces sels parmi NaCl, $BaCl_2$, $CaCl_2$ et $Al_2(SO_4)_3$.

20. Procédé suivant la revendication 18, dans lequel on chauffe à l'air les perles poreuses imprégnées de liquide au taux de 1-10°C/min.

21. Procédé suivant la revendication 18, dans lequel avant imprégnation on sèche les perles entre 90 et 150° à des pressions variant de 0,013 à 1,013 bar (10-760 Torr).

22. Procédé suivant la revendication 18, dans lequel le rapport pondéral (I) entre les perles séchées avant leur imprégnation et les sels, pris à l'état sec, est de 0,05 à 4,5.

23. Procédé suivant la revendication 22, dans lequel on imprègne les perles présentant des pores d'environ 10-4000 nm (100-40.000 Å) distribués aléatoirement par du NaCl aqueux, (I) valant 0,082, puis on chauffe 4 h à 750°C et on refroidit et lave avec $H_2O$, ce par quoi on obtient une structure comportant 60% de pores dans la gamme des 35-50 nm (350-500 Å).

24. Procédé suivant la revendication 1, dans lequel lorsqu'on augmente la température et le temps de chauffe à l'étape (f) on tend à augmenter la quantité des pores se situant dans la gamme de 10-50 nm (100-500 Å).

25. Procédé suivant la revendication 1, dans lequel la taille des pores, exprimée sous forme de la longueur de leur rayon, varie radialement dans les perles, les plus gros pores étant situés vers la périphérie.

26. Procédé suivant la revendication 1, dans lequel le rayon moyen des pores avant imprégnation par un sel est fonction des conditions de préhydrolyse qui prévalent aux étapes (a) et (b), la grandeur de taille des pores variant inversement avec la quantité d'eau qu'on ajoute à l'étape (a).

27. Procédé suivant la revendication 1, dans lequel après l'étape (g) les produits séchés présentant des pores d'une taille déterminée, celle-ci étant traduite par la longueur de leur rayon, sont soumis à un traitement par du chlore gazeux à une température variant entre 500 et 1200°C, de manière à réduire le taux de groupes OH à la surface des pores.

28. Procédé suivant la revendication 1, dans lequel après l'étape (g) on soumet les produits secs à un traitement hydrothermique en milieu aqueux à des pressions de 4,08 à 318 bar (10-350 atm) et à des températures de 100 à 350°C, de manière à modifier le taux de OH et la configuration métalloxanique à la surface des pores.

29. Procédé suivant les revendications 1 et 27, dans lequel on effectue un traitement thermique final (500-1200°C) assez longtemps pour provoquer la cristallisation de la matrice vitreuse, ce qui fournit une matière en verre-céramique sans réduire de manière significative le volume et le rayon des pores.

FIG. 1

FIG. 2